# EUROPÄISCHE PATENTSCHRIFT

(11) **EP 0 741 373 B1**
(45) Veröffentlichungstag und Bekanntmachung des Hinweises auf die Patenterteilung: **19.03.2003**
(21) Anmeldenummer: 96106241.1
(22) Anmeldetag: 20.04.1996
(51) Int. Cl.: G07B 15/00, G07C 5/00

(54) **System zum Erfassen der von einem Fahrzeug in einem vorgegebenen Bereich zurückgelegten Fahrstrecke**
System for detecting the distance travelled by a vehicle in a given area
Système de détection de la distance parcourue par un véhicule dans une zone prédéterminée

(30) Priorität: 04.05.1995 DE 19516061
(43) Veröffentlichungstag der Anmeldung: 06.11.1996
(73) Patentinhaber: ROBERT BOSCH GMBH, 70442 Stuttgart (DE)
(72) Erfinder: Blischke, Frank, Dr. Dr.-Ing., 31141 Hildesheim (DE); Gerlings, Karl-Heinz, Dipl.-Ing., 38259 Salzgitter (DE); Fischer, Hans-Juergen, Dr. Dr.-Ing., 31141 Hildesheim (DE); Ohler, Michael, 31035 Despetal (DE); Bässler, Rolf, Dipl.-Ing., 71522 Backnang (DE); Mongold, Ralf, Dipl.-Ing. (FH), 71384 Weinstadt 2 (DE)

(56) Entgegenhaltungen:
- EP-A- 0 616 302
- WO-A-90/09645
- GB-A- 2 224 418
- GB-A- 2 255 665
- GB-A- 2 271 180
- US-A- 4 398 172
- US-A- 5 289 183

## Beschreibung

### Stand der Technik

Die Erfindung betrifft ein System zum Erfassen der von einem Fahrzeug in einem vorgegebenen Bereich zurückgelegten Fahrstrecke mit einem Fahrzeuggerät, mit dem die gefahrene Fahrstrecke gemessen wird. Aus der DE 43 09 263 A1 ist ein System zum Erfassen und Verrechnen der von einem Fahrzeug auf vorgegebenen Strecken zurückgelegten Entfernungen bekannt. Das System weist ein am Fahrzeug angebrachtes Meß- und Anzeigegerät auf, von dem wenigstens das Anzeigegerät sichtbar ist. Das Meßteil wird beim Auffahren auf eine vorgegebene Strecke in Funktion gebracht und beim Verlassen außer Funktion gesetzt. Das Meßteil mißt die während der Funktion zurückgelegte Strecke. Die Summe der zurückgelegten Entfernungen wird aufaddiert und jeweils gespeichert. Das Anzeigegerät weist ein erneuerbares Anzeigeteil auf, das nach einer vorgegebenen Entfernungssumme seine Ungültigkeit anzeigt.

Der Nachteil eines solchen beschriebenen Gerätes ist; daß der gesamte Vorgang von der Ermittlung der Wegstrecke bis zur Abbuchung der Kosten im Fahrzeug stattfindet und das Fahrzeuggerät entsprechend aufwendig ist. Außerdem ist das Fahrzeuggerät nicht für weitere Anwendungen einsetzbar. Auch ist der Manipulationsschutz an einem solchen Gerät gering.

Die GB-A 22 55 665 beschreibt ein Fahrzeuggerät, welches Daten in Verbindung mit dem Management einer Fahrzeugflotte an ortsfeste Empfangseinrichtungen sendet. Unter den übertragenen Daten ist die vom Fahrzeug zurückgelegte Entfernung, die auf der Basis eines im Speicher des Fahrzeuggeräts abgelegten Anfangskilometerstand bestimmt wird. Durch die Bestimmung der zurückgelegten Fahrstrecke im Fahrzeuggerät ist auch bei dieser bekannten Lösung der Schutz gegen Manipulationen nicht zufriedenstellend.

Es ist Aufgabe der Erfindung ein System zum Erfassen der von einem Fahrzeug in einem vorgegebenen Bereich zurückgelegten Fahrstrecke anzugeben, das so aufgebaut ist, daß eine Erweiterung mit Zusatzanwendugen ermöglicht wird. Ein solches System wir durch die Merkmale des Patentanspruches 1 beschrieben. Vorteilhafte Weiterbildungen sind den Unteransprüchen zu entnehmen.

Das erfindungsgemäße System weist folgende Vorteile auf: Es wird ein einfaches Fahrzeuggerät eingesetzt. Es besteht nur ein geringer Manipulationsanreiz am Fahrzeuggerät, da im Fahrzeuggerät keine Speicherung von aufsummierten Fahrleistungen oder von der Passage von Streckenabschnitten erfolgt. Es kann der Einsatz von bewährten Fahrzeugkomponenten zur Streckenerfassung gewährleistet werden. Durch die zentrale Datenerfassung und Verwaltung wird eine maximale Datensicherheit und Flexibilität gewährleistet. Eine Erweiterung des Systems ist ohne Änderung der Fahrzeuggeräte bzw. deren Austausch möglich. Für Systemerweiterungen bedarf es nur des weiteren Ausbaus der Infrastruktur. In der Zentrale ist weitgehend eine beliebige Datenhaltung ermöglicht. Auch können beliebige Abrechnungsverfahren eingesetzt werden. Die Gebührenerhebung für zusätzliche Streckenabschnitte, wie z.B. Tunnel, Brücken, Alpenpässen wird ermöglicht.
Das Fahrzeuggerät, das die Fahrleistung ermittelt, ist preisgünstig, robust und kann gleichzeitig ohne großen Aufwand in ein Fahrzeug montiert werden. Außerdem ist dem Manipulationsschutz bzw. dessen Aufdeckung und Registrierung besondere Beachtung geschenkt. Es ist besonders vorteilhaft, die Fahrleistung fahrzeugseitig zu erheben und zur weiteren Bearbeitung in regelmäßigen Abständen zur Verfügung zu stellen.

Aus der DE 41 07 803 A1 ist eine Anordnung zum Lokalisieren von Objekten und zum Austauschen von Daten mit diesen Objekten bekannt. Bei dieser Anordnung sind in Fahrzeugen Fahrzeuggeräte vorgesehen, die mit Feststationen einen Datenaustausch durchführen können. Von den Fahrzeuggeräten soll jedes einzelne lokalisiert werden können. Dazu wird eine vorgegebene Zone von einer Feststation aus von einer Mikrowellenantennenanordnung mit mehreren feststehenden die gesamte Zone abdeckenden Strahlungskeulen oder mit einer schwenkbaren Strahlungskeule ausgeleuchtet. Die Anordnung kann zur Erfassung von Mautgebühren von Fahrzeugen eingesetzt werden.

Es wird ein System zum Erfassen der von einem Fahrzeug in einem vorgegebenen Bereich zurückgelegten Fahrstrecke vorgeschlagen, das für jedes Fahrzeug ein Fahrzeuggerät, Feststationen und eine Zentrale aufweist. Das Fahrzeuggerät erfaßt fortlaufend die gefahrenen Kilometer, unabhängig vom jeweiligen Ort. An den Grenzen des vorgegebenen Bereichs oder an Übergängen zu zusätzlichen Zonen (Tunnel, Brücke, Alpenpaß, etc.) wird der aktuelle Kilometerstand sowie eine eindeutige Identifikationsnummer vom Fahrzeuggerät an eine Feststation übermittelt. Die Übertragung der Daten erfolgt hierbei beispielsweise mittels Mikrowelle. Die Daten werden dann an eine Zentrale weitergegeben, die sie verwaltet und die Berechnung der innerhalb des vorgegebenen Bereichs gefahrenen Kilometer durchführt. Die Erhebung der Gebühren erfolgt über die Zentrale. Mit diesem Ansatz wird eine nahezu beliebig erweiterbare Struktur geschaffen, die es ermöglicht, unterschiedliche vorgegebene Bereiche und Streckenabschnitte zu verwalten. Für Erweiterungen sind keine Änderungen am Fahrzeuggerät erforderlich, da dessen Grundfunktion, die "Meldung des aktuellen Kilometerstandes" nicht verändert werden muß.

Die Beschreibung eines Ausführungsbeispiels des erfindungsgemäßen Systems erfolgt anhand der Figuren. Es zeigen
Figur 1 einen schematischen Aufbau des Systems,
Figur 2 ein Blockschaltbild des Fahrzeuggerätes,

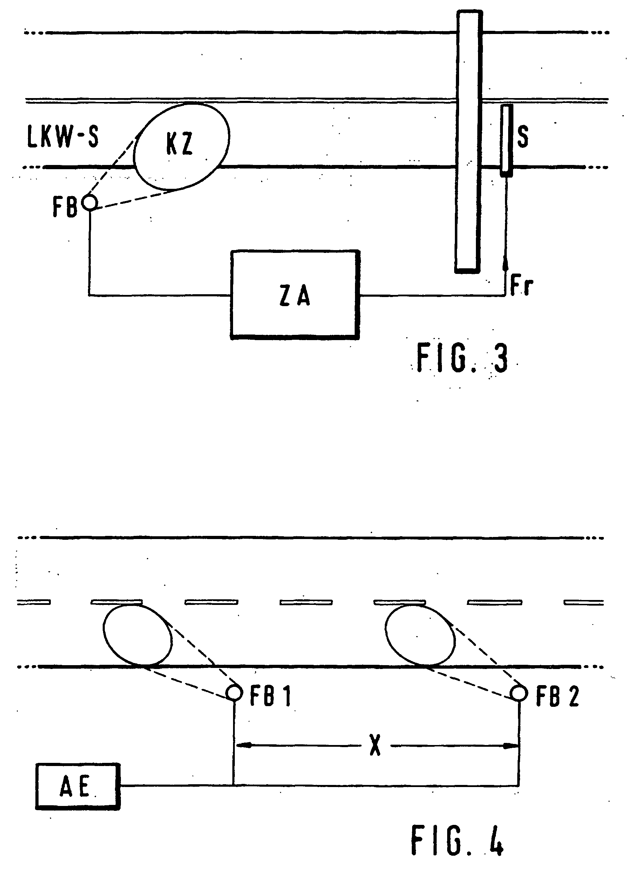

Figur 3 eine Einfahrt in einen vorgegebenen Bereich und
Figur 4 eine Kontrollstelle.

Das System besteht im wesentlichen aus der fahrzeugseitigen Ausrüstung FA, der straßenseitigen Ausrüstung SA und der Zentrale Z. Die fahrzeugseitige Ausrüstung FA umfaßt das Fahrzeuggerät FG, mit dem die zurückgelegte Fahrstrecke ermittelt wird. Dies kann beispielsweise durch die Auswertung der Pulssignale eines angeschlossenen Fahrtenschreibers F erfolgen. Die straßenseitige Ausrüstung umfaßt Auslesestationen Einfahrt ASE, Auslesestationen Ausfahrt ASA, weitere Auslesestationen AS, z.B. an zusätzlichen Streckenabschnitten wie Tunnels oder Brücken, und manuelle Stationen M. Die Auslesestationen Einfahrt ASE befinden sich jeweils an der Einfahrt in den vorgegebenen Bereich, die Auslesestationen Ausfahrt AEA jeweils an einer Ausfahrt aus dem vorgegebenen Bereich. Die einfachen Auslesestationen AS befinden sich beispielsweise vor einem Tunnel, für den ein weitere Gebühr fällig wird. Bei jeder Passage einer Auslesestation wird eine Identifikationsnummer und die zugehörige Wegstrecke aus dem Fahrzeuggerät FG ausgelesen und zur Auslesestation ASE, ASA, AS übertragen. Die Auslesestationen ASE, ASA, AS übertragen diese Daten mit weiteren lokalen Informationen, wie Datum, Zeit, Ort etc. und Informationen ob es sich um eine Ausfahrt, eine Einfahrt oder eine zusätzliche Gebühr handelt, über eine Offline-Verbindung zur Zentrale Z. Diese verwaltet ein zentrales Kilometerkonto zu jeder Identifikationsnummer und kann die Berechnung der im System zurückgelegten Wegstrecken durchführen. Die Abrechnung mit einem Fahrzeughalter oder Spediteur kann beispielsweise jährlich oder monatlich als Abschlagszahlung erfolgen.

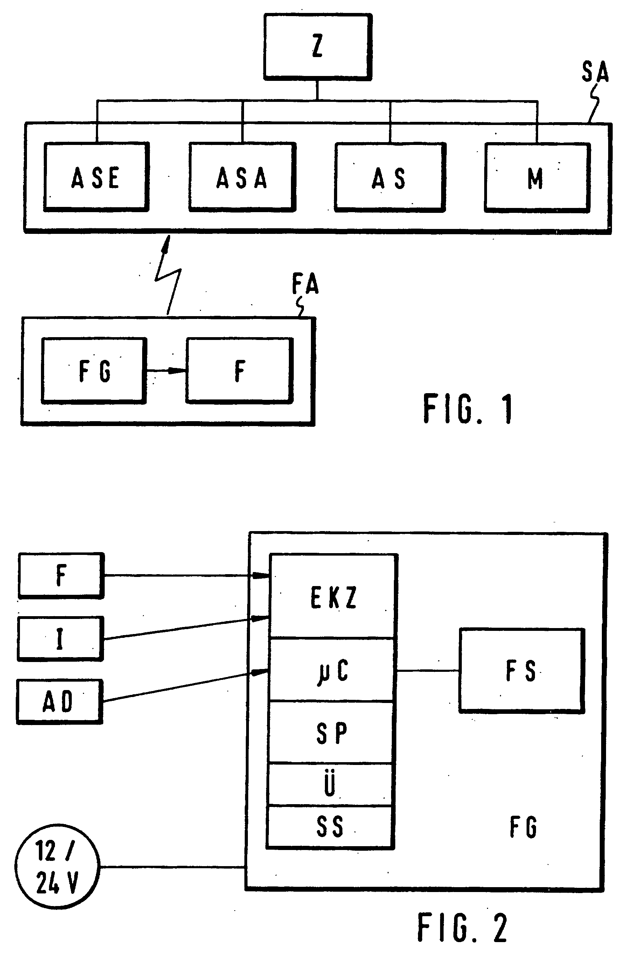

Das Fahrzeuggerät FG weist mehrere Funktionen auf, wie sie auch in Figur 2 dargestellt sind. Zunächst dient es zur Ermittlung der zurückgelegten Fahrstrecke. Außerdem findet die Funkkommunikation mit den Feststationen, also den Auslese- und Kontrollstationen zur Übermittlung des aktuellen Kilometerstandes und zur Kontrollfunktion zur Überwachung statt. Eine Kommunikation über eine leitungsgebundene Schnittstelle SS zur Konfiguration des Fahrzeuggerätes (Identifikationsnummer, fahrzeugspezifische Daten, Teilerfaktor für Fahrtschreiberanpassung), zum Auslesen von internen gespeicherten Daten, z.B. jährliche Ablesung des Kilometerstandes und zur Durchführung von Diagnosefunktionen ist vorgesehen. Weiter ist eine Selbstüberwachung Ü mit Statusanzeige vorgesehen. Zur Ermittlung der zurückgelegten Wegstrecke besitzt das Fahrzeuggerät FG eine Schnittstelle zum Fahrtenschreiber F. Der Fahrtenschreiber F verfügt über einen standardisierten Impulsausgang zur elektronischen Wegstreckenmessung. Durch die Auswertung dieser Impulssignale kann die zurückgelegte Wegstrecke im elektronischen Kilometerzähler EKZ ermittelt werden. Die Schnittstelle am Fahrtenschreiber F ist verplombbar und entspricht dem derzeitigen Stand der Technik. Für Fahrzeuge älterer Bauart mit Fahrtenschreiber F ohne Impulsausgang besteht die Möglichkeit, einen Impulsgeber I mit derselben Funktionalität an der Getriebeeinheit zu installieren. Zu einem definierten Zeitpunkt (z.B. bei Installation des Fahrzeuggerätes FG) wird der Kilometerzähler EKZ auf Null gesetzt. Ab diesem Zeitpunkt werden alle zurückgelegten Fahrkilometer aufsummiert und der aktuelle Kilometerstand bei jeder Passage an eine Feststation übertragen. Die Funkkommunikation mit den Feststationen erfolgt in einem Frequenzbereich von 5,795 bis 5,815 GHz. Durch eine am Straßenrand installierte Bake als Feststation wird eine bidirektionale Kommunikation mit dem Fahrzeuggerät FG durchgeführt.. Zur Kommunikation dient eine Funkschnittstelle FS. Eine Anhängererkennung ist über eine geeignete Sensorik möglich. Die Daten des Anhängerdetektors AD werden im Mikroprozessor µC des Fahrzeuggerätes FG ausgewertet und im nichtflüchtigen Speicher SP des Fahrzeuggerätes FG gespeichert. Jede zusätzliche Anhängerfahrt erhöht den elektronischen Kilometerzähler EKZ für die Anhängerfahrt. Weiter weist das Fahrzeuggerät FG eine leitungsgebundene Schnittstelle SS auf; die zur Konfigurierung, Diagnose und Überwachung dient. Die Schnittstelle SS kann durch kryptographischen Schutz nur von autorisierter Stelle angesprochen werden. Sie wird verwendet für die Konfigurierung des Fahrzeuggerätes mit fahrzeugspezifischen Daten, die in der Regel nur einmalig erfolgt. Sie dient auch zur Konfigurierung des Fahrzeuges mit Anpassungsdaten, zur jährlichen Ablesung des Wegstreckenzählers und zur Diagnose und Überwachung des Fahrzeuggerätes. Um die Funktion des Fahrzeuggerätes auch für den Fahrer zu erkennen, besitzt das Gerät einen Überwachungsmodul Ü, mit dem Veränderungen an den Geräten erkannt werden.

Für die Funkkommunikation zwischen Fahrzeuggerät FG und Feststation werden Sicherheitsprotokolle eingesetzt. Diese gewährleisten eine fehlerfreie und sichere Übertragung der Daten. Hierfür werden Krypto-Verfahren mit gegenseitiger Authentifizierung angewendet, wie sie bereits für die automatische Gebührenerhebung entwickelt wurden. Die Funktionen des beschriebenen Fahrzeuggerätes lassen sich bei Neuentwicklungen direkt in den Fahrtenschreiber integrieren. Feststationen werden in der Hauptsache an den Grenzen des vorgegebenen Bereichs installiert. Für Fahrzeuge, die sich nur im vorgegebenen Bereich bewegen, wird z.B. ein jährliche Ablesung und Überprüfung der Fahrzeuggeräte durch authorisierte Stellen vorgenommen. Die in den Feststationen erhobenen Daten der Fahrzeuggeräte werden zusammen mit lokalen Informationen zur weiteren Bearbeitung an eine Zentrale gesendet. Bei jedem Übertritt eines Fahrzeuges in oder aus dem vorgegebenen Bereich erfolgt eine Funkübertragung der aktuellen Daten des Fahrzeuggerätes FG zu einer entsprechenden Feststation, entweder eine Auslesestationen Einfahrt ASE oder einer Auslesestation Ausfahrt ASA. Gleichzeitig wird die Funktionsfähigkeit des Fahrzeugerätes FG mit der Funkkommunikation überprüft. Bei der Einfahrt werden die Daten des Fahrzeuggerätes über Funkkommunikation ausgelesen. Die erfolgreiche Erfassung der Daten (Identitätsnummer, Kilometerstand, Kraftfahrzeugkennzeichen) wird beispielsweise in einem Terminal der Zollabfertigung (wenn es sich bei dem vorgegebenen Bereich um die Schweiz handelt und um eine Feststation an der Grenze) angezeigt. Bei der Zollabfertigung erhält der Fahrer zusammen mit seinen sonst üblichen Zollpapieren die elektronische Freigabe zur Weiterfahrt an der Grenze. So kann z.B. kurz vor einer Ausfahrtschranke S über die Identifikationsnummer des Fahrzeugegerätes FG und des Freigabebefehls Fr von der Zollabfertigung ZA aus die Ausfahrtschranke S geöffnet werden.

Im Rahmen der jährlich anfallenden Fahrzeuginspektion ist es sinnvoll, zusammen mit dieser Inspektion auch das Fahrzeuggerät jährlich auf ordnungsgemäße Funktion zu überprüfen. Es sind dabei Auslesestationen AS vorgesehen, die eine Diagnose und Überprüfung des Fahrzeuggerätes FG über die serielle Schnittstelle SS durchführen. Diese Schnittstelle ist durch kryptographischen Schutz nur für authorisierte Stellen zugänglich. Zusätzlich zur Auslösung des elektronischen Wegstreckenzählers kann der Kilometerstand des Fahrtenschreibers in das System eingegeben werden. Bei Kontrollen können so evtl. Manipulationen am Fahrzeuggerät durch Differenzen zwischen Fahrtenschreiberstand und Stand des elektronischen Kilometerzählers EKZ erkannt werden.

Um Stichprobenkontrollen auch im fließenden Verkehr zu ermöglichen, können zusätzliche mobile Kontrollstellen MS eingesetzt werden. Diese können z.B. an Hauptverkehrsstrecken eingesetzt werden. Mit den Kontrollstellen kann die ordnungsgemäße Funktionsfähigkeit des Fahrzeuggerätes FG überprüft werden. Dazu befinden sind in kurzem definiertem Abstand X hintereinander zwei Kontrollstellen mit jeweils einer Funkbake FB1, FB2. Eine Auswerteeinheit AE ist vorgesehen, mit der überprüft wird, ob die definierte Entfernung X zwischen den beiden Funkbaken FB1, FB2 von dem Fahrzeuggerät FGb anzeigt wird. Bei Abweichungen von der tatsächlichen Entfernung können die Fahrzeuge z.B. durch ihre Identifikationsnummer oder das Kraftfahrzeugkennzeichen zu einer Überprüfung aufgesucht werden.

Alle durch die Feststationen erfaßten Daten werden zur Zentrale Z weitergeleitet. Die Weiterleitung kann beispielsweise Offline durch Zwischenspeicherung an der Feststation erfolgen. In einer Datenbank werden folgende Daten gespeichert: Identitätsnummer, Kraftfahrzeugnummer, aktueller Kilometerstand, zugehörige Ortskennung (Einfahrt, Ausfahrt, Zwischenkontrolle). Der Detaillierungsgrad der Daten ist weitestgehend beliebig (Ortsname, Datum, Uhrzeit etc.). Eine Berechnung der tatsächlich gefahrenen Kilometer in der vorgegebenen Zone erfolgt durch Abgleich der Datensätze.

## Patentansprüche

1. System zum Erfassen der von einem Fahrzeug in einem vorgegebenen Bereich zurückgelegten Fahrstrecke zur Gebührenerhebung mit folgenden Merkmalen:
- im Fahrzeug ist ein Fahrzeuggerät (FG) vorgesehen, mit dem die gefahrene Fahrstrecke fortlaufend unabhängig vom jeweiligen Ort gemessen wird,
- es sind zumindest an den Einfahrten in den vorgegebenen Bereich und den Ausfahrten aus dem vorgegebenen Bereich Feststationen (ASE, ASA) vorgesehen, die Mittel zum Empfang von von einem Fahrzeuggerät (FG) ausgesendeten Daten aufweisen,
- das Fahrzeuggerät (FG) weist Mittel zum Senden von Daten auf, die den aktuellen Kilometerstand sowie eine eindeutige Identifikationsnummer an eine zu passierende Feststation (ASE, ASA) übermitteln,
- es ist eine Zentrale (Z) vorgesehen, an die die Feststationen (ASE,ASA) die empfangenen Daten zusammen mit Informationen über Einfahrt in den oder Ausfahrt aus dem vorgegebenen Bereich zur Erhebung von Gebühren weiterleiten.

2. System zum Erfassen der von einem Fahrzeug in einem vorgegebenen Bereich zurückgelegten Fahrstrecke nach Patentanspruch 1, **dadurch gekennzeichnet, daß** die Feststationen zusätzlich lokale Informationen über Ort, Zeit oder Datum an die Zentrale (Z) übertragen.

3. System nach einem der Ansprüche 1 oder 2, **dadurch gekennzeichnet, daß** die Kommunikation zwischen Fahrzeuggerät (FG) und Feststationen (ASE, ASA) über Mikrowellen erfolgt.

4. System nach einem der Ansprüche 1 bis 3, **dadurch gekennzeichnet, daß** das Fahrzeuggerät (FG) mit einem Fahrtschreiber (F) verbunden ist, von dem die Fahrstrecke gemessen wird.

5. System nach einem der Ansprüche 1 bis 4, **dadurch gekennzeichnet, daß** die Zentrale (Z) Mittel zur Auswertung der von den Feststationen übermittelten Daten aufweist.

6. System nach einem der Ansprüche 1 bis 5, **dadurch gekennzeichnet, daß** die Zentrale (Z) Mittel zur Erhebung von Gebühren in Abhängigkeit von der in dem vorgegebenen Bereich zurückgelegten Fahrstrecke aufweist.

7. System nach einem der Ansprüche 1 bis 6, **dadurch gekennzeichnet, daß** das Fahrzeuggerät (FG) eine serielle Schnittstelle aufweist und daß Auslesestationen (AS) vorgesehen sind, die über die serielle Schnittstelle (SS) eine Datenübertragung zwischen Fahrzeuggerät (FG) und Auslesestation (AS) sowie eine Diagnose und Überprüfung durchführen können.

8. System nach einem der Ansprüche 1 bis 7, **dadurch gekennzeichnet, daß** Feststationen (AS) im vorgegebenen Bereich an zusätzlichen Streckenabschnitten, für die eine Gebühr erhoben werden soll, vorgesehen sind, die bei Passage eines Fahrzeugs die Identifikationsnummer und eine lokale Information an die Zentrale (Z) weiterleiten.

## Claims

1. System for detecting the distance travelled by a vehicle in a predefined area for the purpose of charging tolls, having the following features:
- a vehicle device (FG) with which the distance travelled is continuously measured independently of the respective location is provided in the vehicle,
- fixed stations (ASE, ASA) which have means for receiving data emitted by a vehicle device (FG) are provided at least at the entries to the predefined area and the exits from the predefined area,
- the vehicle device (FG) has means for transmitting data which communicate the current kilometre reading and a uniquely defined identification number to a fixed station (ASE, ASA) to be passed,
- a control centre (Z) to which the fixed stations (ASE, ASA) forward the received data together with information on entry into or exit from the predefined area in order to charge tolls is provided.

2. System for detecting the distance travelled by a vehicle in a predefined area according to Patent Claim 1, **characterized in that** the fixed stations additionally transmit local information on location, time or data to the control centre (Z).

3. System according to either of Claims 1 and 2, **characterized in that** the communication between the vehicle device (FG) and fixed stations (ASE, ASA) is carried out by means of microwaves.

4. System according to one of Claims 1 to 3, **characterized in that** the vehicle device (FG) is connected to a tachograph (F) by which the distance travelled is measured.

5. System according to one of Claims 1 to 4, **characterized in that** the control centre (Z) has means for evaluating the data transmitted by the fixed stations.

6. System according to one of Claims 1 to 5, **characterized in that** the control centre (Z) has means for charging tolls as a function of the distance travelled in the predefined area.

7. System according to one of Claims 1 to 6, **characterized in that** the vehicle device (FG) has a serial interface, and **in that** read-out stations (AS) which can transmit data between the vehicle device (FG) and read-out station (AS) via the serial interface (SS) as well as perform diagnostics and checking are provided.

8. System according to one of Claims 1 to 7, **characterized in that** fixed stations (AS) are provided in the predefined area at additional route sections for which a toll is to be charged, which fixed stations (AS) forward the identification number and a local information item to the control centre (Z) when a vehicle passes.

## Revendications

1. Système de saisie d'un trajet parcouru par un véhicule dans une zone prédéterminée pour percevoir une taxe,
**caractérisé par**
- un appareil de véhicule (FG) équipant le véhicule et qui mesure en continu le trajet parcouru, indépendamment de l'emplacement respectif ;
- des postes fixes à (ASE, ASA) prévus au moins aux entrées de la zone prédéterminée ainsi qu'aux sorties de cette zone, ces postes comportant des moyens pour recevoir les données émises par l'appareil du véhicule (FG);
- l'appareil (FG) comporte des moyens pour émettre des données transmettant l'état kilométrique actuel ainsi qu'un numéro d'identification unique à un poste fixe sur le passage (ASE, ASA) ;
- une centrale (Z) recueillant les données reçues par les postes fixes (ASE, ASA) avec les informations concernant l'entrée et la sortie de la zone prédéterminée pour prélever des taxes.

2. Système de saisie d'un trajet parcouru par un véhicule dans une zone déterminée selon la revendication 1,
**caractérisé en ce que**
les postes fixes transmettent en plus des informations locales concernant le lieu, l'heure et la date, à la centrale (Z).

3. Système de saisie selon l'une des revendications 1 ou 2,
**caractérisé en ce que**
la communication entre l'appareil du véhicule (FG) et les postes fixes (ASE, ASA) se fait par hyperfréquence.

4. Système de saisie selon les revendications 1 à 3,
**caractérisé en ce que**
l'appareil de véhicule (FG) est relié à un appareil d'inscription de trajet (F) qui mesure le trajet parcouru.

5. Système de saisie selon l'une des revendications 1 à 4,
**caractérisé en ce que**
la centrale (Z) comporte des moyens pour exploiter les données transmises par les postes fixes.

6. Système de saisie selon l'une des revendications 1 à 5,
**caractérisé en ce que**
la centrale (Z) comporte des moyens pour prélever des taxes en fonction du trajet parcouru dans la zone prédéterminée.

7. Système de saisie selon l'une des revendications 1 à 6,
**caractérisé en ce que**
l'appareil du véhicule (FG) comporte une interface série et les postes de lecture (AS) sont prévus pour effectuer par l'interface série (SS), une transmission de données entre l'appareil (FG) du véhicule et le poste de lecture (AS) ainsi qu'un diagnostic et un contrôle.

8. Système de saisie selon l'une des revendications 1 à 7,
**caractérisé en ce que**
les postes fixes (AS) sont prévus dans des zones prédéterminées de segment de trajet supplémentaire pour lesquelles une taxe doit être prélevée et qui au passage d'un véhicule transmettent un numéro d'identification ainsi qu'une information locale vers la centrale (Z).
